# EUROPÄISCHE PATENTSCHRIFT

(11) **EP 2 948 695 B1**
(45) Veröffentlichungstag und Bekanntmachung des Hinweises auf die Patenterteilung: **13.06.2018**
(21) Anmeldenummer: 13830206.2
(22) Anmeldetag: 17.12.2013
(51) Int. Cl.: F16G 11/02

(54) **DRAHTSEILMONTAGEEINHEIT**
WIRE ROPE ASSEMBLY UNIT
UNITÉ DE MONTAGE DE CÂBLE MÉTALLIQUE

(30) Priorität: 25.01.2013 DE 102013100732
(43) Veröffentlichungstag der Anmeldung: 02.12.2015
(73) Patentinhaber: Casar Drahtseilwerk Saar GmbH, 66459 Kirkel (DE)
(72) Erfinder: WEIRICH, Johannes, 66125 Saarbrücken (DE)
(74) Vertreter: Patentanwälte Bernhardt / Wolff Partnerschaft mbB
(86) Internationale Anmeldenummer: PCT/DE2013/100427
(87) Internationale Veröffentlichungsnummer: WO 2014/114277

(56) Entgegenhaltungen:
- CA-A1- 2 431 350
- DE-C1- 19 708 029
- DE-U1- 20 311 106
- DE-U1-202005 003 363
- US-A- 1 908 838
- US-A- 2 901 822

## Beschreibung

Die Erfindung betrifft eine Drahtseilmontageeinheit, die ein Drahtseil und eine Einrichtung zur Montage des Drahtseils umfasst, welche an einem Ende des Drahtseils befestigt ist und ein Verbindungselement, das stirnseitig am Ende des Drahtseils angeordnet ist, aufweist, wobei die Montageeinrichtung eine Hülse, die eine Mantelfläche eines Endabschnitts des Drahtseils umgreift, aufweist.

Die Erfindung betrifft ferner ein Verfahren zur Herstellung der Drahtseilmontageeinheit.

Eine solche aus US 2 901 822 A bekannte Montageeinheit umfasst eine eine Mantelfläche eines Endabschnitts eines Drahtseils umgreifende Hülse, die mit dem Drahtseil und mit einem stirnseitig am Ende des Drahtseils in der Hülse angeordneten Abschnitt eines Ringbolzens verpresst ist.

CA 2 431 350 A1 beschreibt eine Drahtseilmontageeinrichtung, die eine Hülse aufweist, welche eine Mantelfläche eines Endabschnitts eines Drahtseils umgreift und mit dem Endabschnitt verpresst ist.
Eine in DE 197 08 029 C1 beschriebene Drahtseilmontageeinheit weist eine über einen Endabschnitt eines Drahtseils geschobene Hülse, die mit dem Drahtseil verpresst ist, auf. Zum Verbinden der Hülse mit einem Verbindungselement ist in die Mantelfläche der Hülse ein Außengewinde eingebracht.

Aus DE 20 311 106 U1 ist eine Montageeinheit bekannt, die eine mit einem Gewindestab und einem Endabschnitt eines Seils verpresste Hülse umfasst.

Bei einer aus US 1 908 838 A bekannten Drahtseilmontageeinheit wird ein Endabschnitt eines Drahtseils mit einem Gewinde eines Ringbolzens in einer Hülse verpresst.

DE 20 2005 003 363 U1 beschreibt eine Drahtseilmontageeinheit, bei der eine Hülse, die einen Endabschnitt mit einem Innengewinde aufweist, mit einem dem Innengewinde abgewandten Endabschnitt über ein Seilende geschoben und dort verpresst ist. Ein Verbindungselement mit einem passenden Außengewinde kann in das offene, das Innengewinde aufweisende Hülsenende eingedreht werden.

Eine Drahtseilmontageeinheit ist ferner durch Benutzung bekannt. Zur Montage und Demontage sowie bei der Konfektionierung und der Weiterverarbeitung des Drahtseils wird stirnseitig an dessen Ende ein Verbindungselement, das mit einer Öse versehen ist, festgeschweißt. Je nach Anwendung lässt sich das Drahtseil mit einem Objekt, das mit dem Seil zusammenwirken soll, z.B. einem Karabinerhaken, verbinden.
Problematisch ist, dass an der Schweißnaht zwischen dem Drahtseil und dem Verbindungsglied bei Biegebeanspruchung große Kräfte anliegen, die insbesondere aufgrund von Materialermüdung zum Bruch führen können. Dadurch besteht bei Handhabung des Drahtseils eine erhebliche Gefahr.

Der Erfindung liegt diese Aufgabe zugrunde, eine Drahtseilmontageeinheit der eingangs genannten Art zu schaffen, die besser handhabbar ist.

Erfindungsgemäß wird die Aufgabe dadurch gelöst, dass Außenlitzen des Drahtseils in einem Seilabschnitt, in dem das Drahtseil innerhalb der Hülse angeordnet ist, von dem Drahtseil abgetrennt sind.

Vorteilhaft lässt sich die Hülse direkt auf inneren Litzen des Drahtseils anordnen. Vorzugsweise umgreift die Hülse die inneren Litzen auf einer Länge, die zumindest dem Durchmesser des Teils des Drahtseils, der durch die inneren Litzen gebildet ist, vorzugsweise zumindest den 1,5fachen dieses Durchmessers, entspricht. Insbesondere wenn die Wanddicke der Hülse etwa gleich der Dicke der Außenlitzen ist, wird es möglich, eine Drahtseilmontageeinheit mit einem im Wesentlichen einheitlich großen Außendurchmesser zu bilden. Dies ist vor allem dann vorteilhaft, wenn zur Nutzung der Montageeinrichtung nur begrenzter Raum zur Verfügung steht, z.B. bei Montage des Drahtseils an einem Rollenblock eines Flaschenzugs unter Durchziehen des Verbindungselements und der Hülse durch den Rollenblock.

Zweckmäßigerweise ist die Hülse einen Formschluss zwischen der Hülse und dem Drahtseil auf die inneren Litzen des Drahtseils aufgepresst.

In einer besonders bevorzugten Ausgestaltung der Erfindung ist die Hülse, die vorzugsweise aus einem schweißbaren Stahl gebildet ist, an ihrem einen Rand mit Enden der Außenlitzen verbunden, vorzugsweise zusammengeschweißt, sodass Kräfte von der Hülse direkt auf die Außenlitzen übertragen werden können.

Durch Anordnung der Hülse um das Drahtseil herum können durch Formschluss zwischen dem Drahtseil und der Montageeinrichtung neben Zugkräften auch Biegemomente und Drehmomente übertragen werden. Da dabei lokale mechanische Belastungsspitzen vermieden werden, wird die Bruchgefahr erheblich verringert.

Es hat sich gezeigt, dass sich die Drahtseilmontageeinheit besonders stabil bilden lässt, wenn die Hülse das Drahtseil über eine Länge umgreift, die zumindest dem Drahtseildurchmesser, vorzugsweise zumindest einem 1,5fachen des Drahtseildurchmessers, entspricht.
Zweckmäßigerweise ist das Verbindungselement mit einem Verbindungsmittel, beispielsweise einer Öse, einem Haken oder dergleichen, versehen, mittels dessen sich die Montageeinrichtung bzw. das Drahtseil zur Montage mit einem anderen Gegenstand, z.B. einem entsprechend ausgestattetem Montageseil, verbinden lässt.

In einer Ausgestaltung der Erfindung umgreift die Hülse zumindest abschnittsweise auch das Verbindungselement, das vorzugsweise mit einem Verbindungsglied wie einer Schlinge, einer Öse, einem Haken oder dergleichen versehen ist, und bildet eine Verbindung zwischen dem Drahtseil und dem Verbindungselement.

In einer Ausgestaltung der Erfindung ist die Hülse aus einem Material, vorzugsweise Stahl, gebildet, das eine geringere Festigkeit als die Litzen des Drahtseils aufweist. Vorteilhaft lässt sich die Hülse zur Herstellung einer festen Verbindung des Verbindungselements mit dem Drahtseil derart auf das Drahtseil aufbringen, vorzugsweise aufpressen, aufhämmern und/oder aufwalzen, dass die Hülse unter Bildung eines Formschlusses in die unebenen Außenkonturen des Drahtseils eingepresst wird. Ferner wird durch die Anordnung des Drahtseils in dem weicheren Material die Gefahr, dass am Drahtseil beim Aufbringen der Montageeinrichtung oder bei der späteren Nutzung der Drahtseilmontageeinheit durch mechanische Belastungen, die durch die Montageeinrichtung auf das Drahtseil ausgeübt werden, Beschädigungen auftreten, erheblich verringert.

Zweckmäßigerweise sind das Drahtseil, die Hülse und das Verbindungselement aus Stählen unterschiedlicher Festigkeiten gebildet.

Während es vorstellbar wäre, eine feste Verbindung zwischen der Hülse und dem Verbindungselement z.B. durch Schweißen oder Kleben zu bilden, ist die Hülse in der bevorzugten Ausführungsform der Erfindung unter Bildung eines Formschlusses auf das Verbindungselement aufgepresst, aufgehämmert und/oder aufgewalzt. Der Formschluss mit dem Verbindungselement wird zweckmäßigerweise dadurch erreicht, dass das Verbindungselement mit einer Formung, vorzugsweise mit einer Gewindestruktur, versehen ist, die bei Verpressung der Hülse auf das Verbindungselement eine Verzahnung zwischen der Hülse und dem Verbindungselement bildet.

Sowohl die Verbindung des Drahtseils mit der Montageeinrichtung durch Pressen, Hämmern oder Walzen als auch die Verbindung des Drahtseils mit der Montageeinrichtung durch Verbindung des Randes der Hülse mit den Enden der Außenlitzen jeweils für sich genommen ist geeignet, die bei Nutzung der Drahtseilmontageeinheit auftretenden Zugkräfte, Biege- und Drehmomente zu übertragen, sodass jede der Verbindungen unabhängig voneinander zur Bildung der Drahtseilmontageeinheit vorgesehen werden kann. Es versteht sich aber, dass eine besonders stabile Drahtseilmontageeinheit gebildet werden kann, wenn die Verbindung sowohl durch das Pressen, das Hämmern oder das Walzen und durch das Verbinden des Randes der Hülse mit den Enden der Außenlitzen gebildet wird.

Im Folgenden wird die Erfindung anhand eines Ausführungsbeispiels und der beiliegenden, sich auf dieses Ausführungsbeispiel beziehenden Zeichnungen näher erläutert. Es zeigen:
- Fig. 1: eine erfindungsgemäße Drahtseilmontageeinheit in Seitenansicht und im Schnitt,
- Fig. 2: ein Mittel zur Herstellung der erfindungsgemäße Drahtseilmontageeinheit in verschiedenen Ansichten, und
- Fig. 3: ein weiteres Mittel zur Herstellung der erfindungsgemäßen Drahtseilmontageeinheit in verschiedenen Ansichten.

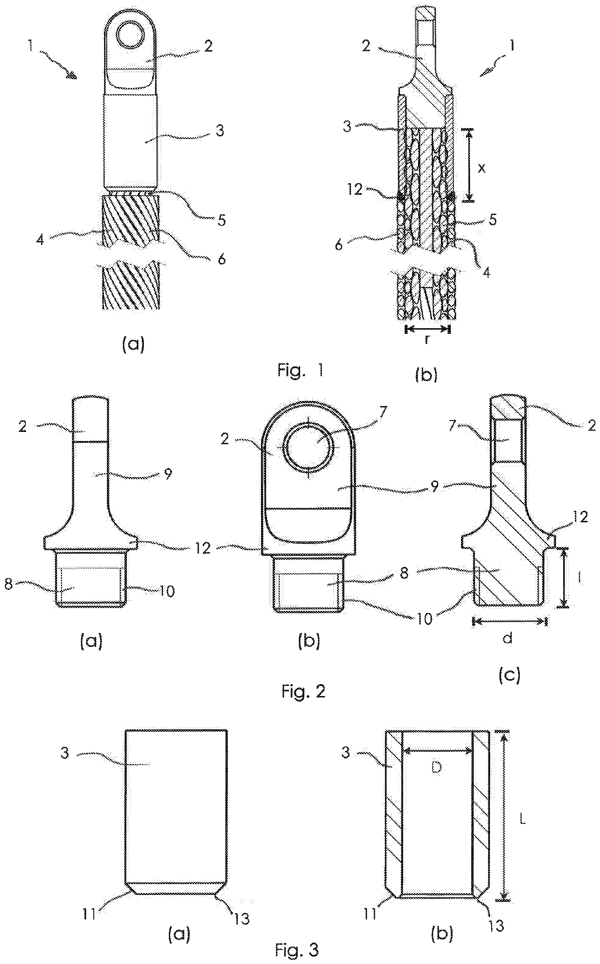

In Fig. 1 ist eine erfindungsgemäße Drahtseilmontageeinheit dargestellt, die ein Drahtseil 4 und eine Montageeinrichtung 1, welche ein Verbindungselement 2 und eine Hülse 3 aufweist, umfasst.

Das in Fig. 2 genauer gezeigte Verbindungselement 2 weist einen zylindrischen Abschnitt 8 der Länge I auf, dessen Durchmesser d ungefähr dem Durchmesser r eines durch Innenlitzen 5 gebildeten Teils des Drahtseils 4 entspricht und der auf seiner Mantelfläche mit einem Gewinde 10 versehen ist.
Das Verbindungselement 2 weist zwischen dem zylindrischen Abschnitt 8 und einem Verbindungsglied 9, das mit einer Ausnehmung 7 zur Aufnahme eines Karabiners oder dergleichen versehen ist, einen Kragen 12 auf, der einen etwas größeren Durchmesser aufweist als der zylindrische Abschnitt 8.

Die Hülse 3, die eine Länge L aufweist, ist mit einem Innendurchmesser D versehen, der geringfügig größer ist als der zylindrische Abschnitt 8, sodass sie sich mit geringem Spiel auf den Abschnitt 8 aufschieben lässt. An ihrem einen Rand 13 ist die Hülse 3 außen mit einer Fase 11 versehen.

Wie insbesondere der Darstellung im Schnitt nach Fig. 1b zu entnehmen ist, sind Außenlitzen 6 des Drahtseils 4 in einem Endabschnitt des Drahtseils 4, mit dem das Drahtseil 4 in der Hülse 3 angeordnet ist, von dem Drahtseil 4 abgetrennt, sodass das Drahtseil 4 lediglich mit seinen inneren Litzen 5 in der Hülse 3 sitzt.

Zur Herstellung der in Fig. 1 gezeigten Drahtseilmontageeinheit werden zunächst an einem Ende des Drahtseils 4 auf eine Länge x = L - I die Außenlitzen 6 abgetrennt. Anschließend wird die Hülse 3 so weit auf die Innenlitzen 5 des Drahtseils 4 aufgesteckt, dass sie mit ihrem Rand 13, an dem die Fase 11 vorgesehen ist, an Enden der Außenlitzen 6 anliegt. Danach wird das Verbindungselement 2 in die Hülse 3 eingesteckt, sodass es mit seinem zylindrischen Abschnitt 8 auf Enden der inneren Litzen 5 und mit der Unterseite seines Kragens 12 auf dem anderen Rand der Hülse 3 aufsitzt.
Dann wird die Hülse 3 mittels eines Presswerkzeuges auf das Verbindungsglied 2 und die inneren Litzen 5 des Drahtseils 4 aufgepresst, wobei die Hülse 3 mit ihrer Innenseite auf Höhe des zylindrischen Abschnitts 8 in das Gewinde 10 eingepresst wird und dadurch eine Verzahnung bildet und auf Höhe der inneren Litzen 5 unter Bildung eines Formschlusses in die Außenkonturen der inneren Litzen 5 eingepresst wird.

Um eine zusätzliche Verbindung zwischen der Hülse 3 und den Außenlitzen 6 herzustellen, können die Außenlitzen 6 zusätzlich an dem Rand der Hülse 3 verschweißt werden, an dem die Fase 11 vorgesehen ist. Eine entsprechende Schweißnaht 12 ist in Fig. 1b dargestellt.

## Patentansprüche

1. Drahtseilmontageeinheit, die ein Drahtseil (4) und eine Einrichtung (1) zur Montage des Drahtseils (4) umfasst, welche an einem Ende des Drahtseils (4) befestigt ist und ein Verbindungselement (2), das stirnseitig am Ende des Drahtseils (4) angeordnet ist, aufweist, wobei die Montageeinrichtung (1) eine Hülse (3), die eine Mantelfläche eines Endabschnitts des Drahtseils (4) umgreift, aufweist,
**dadurch gekennzeichnet,**
**dass** Außenlitzen (6) des Drahtseils (4) in einem Seilabschnitt, in dem das Drahtseil (4) innerhalb der Hülse (3) angeordnet ist, von dem Drahtseil (4) abgetrennt sind.

2. Drahtseilmontageeinheit nach Anspruch 1,
**dadurch gekennzeichnet,**
**dass** die Hülse (3) das Verbindungselement (2) zumindest abschnittsweise umgreift.

3. Drahtseilmontageeinheit nach Anspruch 1 oder 2,
**dadurch gekennzeichnet,**
**dass** die Hülse (3) aus einem Material gebildet ist, das eine geringere Festigkeit als Litzen (5,6) des Drahtseils (3) und ggf. als das Verbindungselement (2) aufweist.

4. Drahtseilmontageeinheit nach einem der Ansprüche 1 bis 3,
**dadurch gekennzeichnet,**
**dass** die Hülse (3) unter Bildung eines Formschlusses auf das Drahtseil (4) und ggf. auf das Verbindungselement (2) aufgebracht, vorzugsweise aufgepresst, aufgehämmert und/oder aufgewalzt, ist.

5. Drahtseilmontageeinheit nach einem der Ansprüche 1 bis 4,
**dadurch gekennzeichnet,**
**dass** das Verbindungselement (2) mit einer Formung, vorzugsweise mit einer Gewindestruktur (9), versehen ist, die bei Verpressung der Hülse (3) auf dem Verbindungselement (2) eine Verzahnung zwischen der Hülse (3) und dem Verbindungselement (2) bildet.

6. Drahtseilmontageeinheit nach einem der Ansprüche 1 bis 5,
**dadurch gekennzeichnet,**
**dass** die Hülse (3) an ihrem einen Rand (13) mit Enden der Außenlitzen (6) verbunden, vorzugsweise zusammengeschweißt, ist.

7. Drahtseilmontageeinheit nach einem der Ansprüche 1 oder 6,
**dadurch gekennzeichnet,**
**dass** die Hülse (3) in dem Seilabschnitt auf die inneren Litzen (5) des Drahtseils (4) aufgepresst, aufgehämmert und/oder aufgewalzt ist.

8. Verfahren zur Herstellung einer Drahtseilmontageeinheit aus einem Drahtseil (4) und einer Einrichtung (1) zur Montage des Drahtseils (4), insbesondere nach den Ansprüchen 1 bis 8, bei dem die Montageeinrichtung (1) an einem Ende des Drahtseils (4) befestigt wird, wobei ein Verbindungselement (2) der Montageeinrichtung (1) stirnseitig am Ende des Drahtseils (4) angeordnet wird, und eine Hülse (3) der Montageeinrichtung (1) derart auf dem Drahtseil (4) befestigt wird, dass sie eine Mantelfläche eines Endabschnitts des Drahtseils (4) umgreift,
**dadurch gekennzeichnet,**
**dass** vor Anordnung der Hülse (3) auf dem Drahtseil Außenlitzen (6) des Drahtseils (4) in einem Seilabschnitt, in dem das Drahtseil (4) innerhalb der Hülse (3) angeordnet ist, von dem Drahtseil (4) abgetrennt werden.

9. Verfahren nach Anspruch 8,
**dadurch gekennzeichnet,**
**dass** die Hülse (3) unter Bildung eines Formschlusses auf das Drahtseil (4) und ggf. auf das Verbindungselement (2) aufgebracht, vorzugsweise aufgepresst, aufgehämmert oder/und aufgewalzt, wird.

10. Verfahren nach Anspruch 8 oder 9,
**dadurch gekennzeichnet,**
**dass** die Hülse (3) mit Enden der Außenlitzen (6), vorzugsweise durch Schweißen, verbunden wird.

## Claims

1. Wire-rope-installation unit which comprises a wire rope (4) and a device (1) which is intended for installing the wire rope (4), is fastened at one end of the wire rope (4) and has a connecting element (2), which is arranged at the end of the wire rope (4), wherein the installation device (1) has a sleeve (3), which engages around a lateral surface of an end portion of the wire rope (4),
**characterized**
**in that** outer strands (6) of the wire rope (4) are separated off from the wire rope (4) in a rope portion in which the wire rope (4) is arranged within the sleeve (3).

2. Wire-rope-installation unit according to Claim 1,
**characterized**
**in that** the sleeve (3) engages around the connecting element (2) at least in part.

3. Wire-rope-installation unit according to Claim 1 or 2,
**characterized**
**in that** the sleeve (3) is formed from a material which has a lower strength than strands (5, 6) of the wire rope (3) and possibly than the connecting element (2).

4. Wire-rope-installation unit according to one of Claims 1 to 3,
**characterized**
**in that** the sleeve (3) is applied to the wire rope (4) and possibly to the connecting element (2), preferably by being pressed on, hammered on and/or rolled on, to form a form fit.

5. Wire-rope-installation unit according to one of Claims 1 to 4,
**characterized**
**in that** the connecting element (2) is provided with a formation, preferably with a threaded structure (9), which, when the sleeve (3) is pressed on the connecting element (2), forms a toothing arrangement between the sleeve (3) and the connecting element (2) .

6. Wire-rope-installation unit according to one of Claims 1 to 5,
**characterized**
**in that**, on its one periphery (13), the sleeve (3) is connected, preferably welded, to ends of the outer strands (6).

7. Wire-rope-installation unit according to either of Claims 1 and 6,
**characterized**
**in that**, in the rope portion, the sleeve (3) is pressed, hammered and/or rolled on to the inner strands (5) of the wire rope (4).

8. Method of producing a wire-rope-installation unit from a wire rope (4) and a device (1) for the purpose of installing the wire rope (4), in particular according to Claims 1 to 8, in the case of which the installation device (1) is fastened at one end of the wire rope (4), wherein a connecting element (2) of the installation device (1) is arranged at the end of the wire rope (4), and a sleeve (3) of the installation device (1) is fastened on the wire rope (4) such that it engages around a lateral surface of an end portion of the wire rope (4),
**characterized**
**in that**, prior to the sleeve (3) being arranged on the wire rope, outer strands (6) of the wire rope (4) are separated off from the wire rope (4) in a rope portion in which the wire rope (4) is arranged within the sleeve (3).

9. Method according to Claim 8,
**characterized**
**in that** the sleeve (3) is applied to the wire rope (4) and possibly to the connecting element (2), preferably by being pressed on, hammered on and/or rolled on, to form a form fit.

10. Method according to Claim 8 or 9,
**characterized**
**in that** the sleeve (3) is connected to ends of the outer strands (6), preferably by welding.

## Revendications

1. Unité de montage de câble métallique qui comprend un câble métallique (4) et un moyen (1) pour monter le câble métallique (4), ledit moyen étant fixé à une extrémité du câble métallique (4) et comprenant un élément de liaison (2) agencé du côté frontal à l'extrémité du câble métallique (4),
dans laquelle
le moyen de montage (1) comprend une douille (3) qui entoure une surface enveloppe d'une portion d'extrémité du câble métallique (4),
**caractérisée en ce que**
des torons extérieurs (6) du câble métallique (4) sont séparés du câble métallique (4) dans une portion du câble dans laquelle le câble métallique (4) est agencé à l'intérieur de la douille (3).

2. Unité de montage de câble métallique selon la revendication 1,
**caractérisée en ce que**
la douille (3) entoure au moins localement l'élément de liaison (2).

3. Unité de montage de câble métallique selon la revendication 1 ou 2,
**caractérisée en ce que**
la douille (3) est réalisée en un matériau qui présente une solidité inférieure à celle des torons (5, 6) du câble métallique (4) et le cas échéant à celle de l'élément de liaison (2).

4. Unité de montage de câble métallique selon l'une des revendications 1 à 3,
**caractérisée en ce que**
la douille (3) est montée, de préférence par pressage, par martelage et/ou par laminage, sur le câble métallique (4) et le cas échéant sur l'élément de liaison (2) en établissant une coopération de formes.

5. Unité de montage de câble métallique selon l'une des revendications 1 à 4,
**caractérisée en ce que**
l'élément de liaison (2) est pourvu d'une conformation, de préférence d'une structure à pas de vis (9) qui, lors du pressage de la douille (3) sur l'élément de liaison (2), réalise une denture entre la douille (3) et l'élément de liaison (2).

6. Unité de montage de câble métallique selon l'une des revendications 1 à 5,
**caractérisée en ce que**
à l'un de ses bords (13), la douille (3) est reliée, de préférence par soudage, aux extrémités des torons extérieurs (6).

7. Unité de montage de câble métallique selon l'une des revendications 1 ou 6,
**caractérisée en ce que**
dans la portion de câble, la douille (3) est pressée, martelée et/ou laminée sur les torons intérieurs (5) du câble métallique (4).

8. Procédé de réalisation d'une unité de montage de câble métallique à partir d'un câble métallique (4) et d'un moyen (1) pour monter le câble métallique (4), en particulier selon les revendications 1 à 8,
dans lequel
ledit moyen de montage (1) est fixé à une extrémité du câble métallique (4) et un élément de liaison (2) du moyen de montage (1) est agencé du côté frontal à l'extrémité du câble métallique (4),
et une douille (3) du moyen de montage (1) est fixée sur le câble métallique (4) de manière à entourer une surface enveloppe d'une portion d'extrémité du câble métallique (4),
**caractérisé en ce que**
avant d'agencer la douille (3) sur le câble métallique, des torons extérieurs (6) du câble métallique (4) sont séparés du câble métallique (4) dans une portion du câble dans laquelle le câble métallique (4) est agencé à l'intérieur de la douille (3).

9. Procédé selon la revendication 8,
**caractérisé en ce que**
la douille (3) est montée, de préférence par pressage, par martelage et/ou par laminage, sur le câble métallique (4) et le cas échéant sur l'élément de liaison (2) en établissant une coopération de formes.

10. Procédé selon la revendication 8 ou 9,
**caractérisé en ce que**
la douille (3) est reliée, de préférence par soudage, aux extrémités des torons extérieurs (6).
